# EUROPÄISCHE PATENTSCHRIFT

(11) **EP 3 187 781 B1**
(45) Veröffentlichungstag und Bekanntmachung des Hinweises auf die Patenterteilung: **08.04.2020**
(21) Anmeldenummer: 16204221.2
(22) Anmeldetag: 15.12.2016
(51) Int. Cl.: F23D 14/02, F23D 14/78, F23D 14/66

(54) **BRENNER MIT EINER ÖFFNUNG FÜR LUFT UND/ODER BRENNSTOFF MIT EINSTELLBAREN KÜHLRIPPEN SOWIE EIN HEIZGERÄT MIT EINEM SOLCHEN BRENNER**
BURNER WITH AN OPENING FOR AIR AND/OR FUEL WITH ADJUSTABLE COOLING FINS AND A HEATING APPARATUS COMPRISING SUCH A BURNER
BRÛLEUR COMPRENANT UN ORIFICE POUR L'AIR ET/OU LE COMBUSTIBLE AYANT DES AILETTES DE REFROIDISSEMENT AJUSTABLES ET APPAREIL DE CHAUFFAGE COMPRENANT UN TEL BRÛLEUR

(30) Priorität: 30.12.2015 TR 201517546
(43) Veröffentlichungstag der Anmeldung: 05.07.2017
(73) Patentinhaber: Bosch Termoteknik Isitma ve Klima Sanayi Ticaret Anonim Sirketi, 45030 Manisa (TR)
(72) Erfinder: Acar, Cenk, 35590 Bostanli Karsiyaka Izmir (TR)
(74) Vertreter: Bee, Joachim

(56) Entgegenhaltungen:
- EP-A1- 3 295 083
- EP-A2- 2 037 175
- US-A- 2 855 032
- US-A- 3 897 198

## Beschreibung

Die Erfindung betrifft einen Brenner mit einer Öffnung für Luft und/oder Brennstoff mit einer Luft-Brennstoff-Kammer deren Bewandung eine Brennerplatte aufweist, wobei in der Öffnung und/oder zwischen der Öffnung und der Brennerplatte einstellbare Kühlrippen angebracht sind, sowie ein Heizgerät mit einem solchen Brenner.

### Stand der Technik

Die DE 10226685 A1 zeigt und beschreibt ein Heizgerät mit einer Brennkammer, in welcher ein Brenner angebracht ist. Der Brenner ist über dem Flammenbereich befestigt, so dass es insbesondere um die Befestigung herum zeitweise zu einer erhöhten thermischen Belastung kommen kann. Die EP 2 037 175 A2 offenbart die im Obergriff von Anspruch 1 aufgeführten Merkmale.

### Offenbarung der Erfindung

### Vorteile

Der erfindungsgemäße Brenner mit den Merkmalen des Hauptanspruchs hat den Vorteil, dass dadurch, dass in der Öffnung für Luft und/oder Brennstoff und/oder zwischen der Öffnung für Luft und/oder Brennstoff und der Brennerplatte von der Luft und/oder dem Brennstoff umströmte Kühlrippen angebracht sind, die Temperatur im Bereich der Öffnung für Luft und/oder Brennstoff gesenkt werden kann.

Dabei ist unter Brennerplatte eine für Luft und den Brennstoff durchlässige Fläche der Luft-Brennstoff-Kammer zu verstehen.

Unter Kühlrippe ist ein in den Strömungsgang eingebrachtes Element, welches die mit der Strömung in Kontakt stehende Fläche der die Strömung umfassenden Bewandung vergrößert, zu verstehen.

Erfindungsgemäß sind die Kühlrippen in ihrer Orientierung relativ zur Öffnungsachse einstellbar angeordnet, was eine Regelung des Flusses der Luft und/oder des Brennstoffes ermöglicht. Damit kann die Wärmeabgaberate der Kühlrippen eingestellt werden. Zudem ermöglicht dies eine Anpassung des Turbulenzgrades der die Öffnung durchströmenden Luft und/oder des Brennstoffes.

Durch die in den Unteransprüchen aufgeführten Merkmale sind vorteilhafte Weiterbildungen des Brenners nach dem Hauptanspruch möglich. So lassen sich die Strömungseigenschaften von der Luft und/oder dem Brennstoff optimieren, wenn die Öffnung für Luft und/oder Brennstoff der Luft-Brennstoff-Kammer trichterförmig ist. Verjüngt sich die trichterförmige Öffnung für Luft und/oder Brennstoff in Richtung der Luft-Brennstoff-Kammer, so wird dort die Strömungsgeschwindigkeit erhöht. Weitet sich die trichterförmige Öffnung für Luft und/oder Brennstoff in Richtung der Luft-Brennstoff-Kammer auf, wird dort die Strömungsgeschwindigkeit erniedrigt. Die Strömungsgeschwindigkeit wirkt sich unmittelbar auf die Wärmeabgaberate der Kühlrippen an die Luft und/oder den Brennstoff aus.
Weist die Brennstoff-Kammer eine Aufnahme mit einem Flansch zum Befestigen des Brenners auf, so wird damit die Fläche der Luft-Brennstoff-Kammer-Bewandung erhöht, was die Kühlleistung in der Umgebung der Öffnung für Luft und /oder Brennstoff erhöht. Insbesondere wird die Überlappungsfläche erhöht, mit der der Brenner im Heizgerät befestigbar ist, wodurch ein Wärmeabfluss begünstigt ist.
Zeigen die Kühlrippen in Richtung der Öffnungsachse und/oder treffen in der Öffnungsachse zusammen, erlaubt dies eine gleichmäßigere Wärmeverteilung, so dass die Wärme auch gleichmäßiger abgeführt wird.

Die Turbulenz der in die Öffnung einströmenden Luft und/oder des Brennstoffes kann durch Öffnungen in den Kühlrippen gesteigert werden. Dies ermöglicht zum einen eine erhöhte Wärmeabgabe durch die Kühlrippen, zum anderen können so Luft und Brennstoff besser vermischt werden, was insbesondere dann von Vorteil ist, wenn keine separate Luft- Brennstoff-Mischeinrichtung vorgesehen ist. Dies liefert den zusätzlichen Vorteil, dass die Luft-Brennstoff-Mischung gleichmäßiger und somit schadstoffärmer verbrennen kann.
Weisen die Kühlrippen jeweils ein gewölbtes Profil auf, begünstigt dies hingegen eine laminare Strömung der Luft und/oder des Brennstoffes. Auf diese Weise kann ein weiter Leistungsmodulationsbereich erreicht werden. Die Ausführungen können aber auch kombiniert werden, um die Effekte überlagert gezielt einzusetzen.
Die Strömungsverhältnisse verbessern sich darüber hinaus, wenn die Luft-Brennstoff-Kammer zylinderförmig ist. Damit wird eine gleichmäßige Verteilung des Luft-Brennstoff-Gemischs an der Brennerplatte begünstig, was wiederum eine gleichmäßigere Wärmeverteilung im Bereich der Öffnung für die Luft und/oder den Brennstoff ermöglicht.
Weist die trichterförmige Öffnung für Luft und/oder Brennstoff eine von der Öffnungsachse wegzeigende Krümmung auf und verjüngt sich in Strömungsrichtung, werden die Strömungsverhältnisse weiter verbessert und damit ein laminarer Fluss begünstig.

Für ein Heizgerät mit solch einem Brenner ergeben sich darüber hinaus weitere Vorteile. Dabei ist unter Heizgerät ein Gerät zur Erzeugung von Wärme zu verstehen, welche an die Umgebung, einen die Wärme transportierenden Stoff oder sonstige Objekte abgegeben wird.

Die thermische Belastung der sich in der nahen Umgebung der Öffnung für Luft und/oder Brennstoff befindenden Bauteile und Komponenten des Heizgeräts wird reduziert. Das ermöglicht den Einsatz günstigerer Materialien und Komponenten, welche keiner erhöhten Hitzeeinwirkung widerstehen müssen. Es wirkt sich positiv auf die Lebensdauer und Zuverlässigkeit des Heizgeräts aus und verlängert damit die Intervalle der benötigten Inspektionen. Weiterhin wird so kein zusätzlicher Kühlmechanismus benötigt, was, neben den genannten Vorteilen, eine kompaktere Bauweise ermöglicht.

Wird der Brenner über den Flansch und eine Dichtung im Heizgerät befestigt, ergibt sich durch die Kühlung des Flansches der Vorteil, dass die Lebensdauer der Dichtung erhöht wird. Außerdem ist es möglich, das Heizgerät in einem erhöhten Leistungsbereich zu betreiben.

### Zeichnungen

In den Zeichnungen sind Ausführungsbeispiele des erfindungsgemäßen Brenners und des erfindungsgemäßen Heizgeräts dargestellt und in der nachfolgenden Beschreibung näher erläutert. Es zeigen
Figur 1 einen Schnitt durch einen erfindungsmäßigen Brenner,
Figur 2 eine schematische Darstellung einer Variante des Brenners,
Figur 3A bis E Varianten möglicher Geometrien der Öffnung für Luft und/oder Brennstoff sowie der Luft-Brennstoff-Kammer und Brennerplatte,
Figur 4A einen Schnitt nach Linie IV-IV in Figur 1 und weitere Varianten B bis E möglicher Kühlrippenanordnungen,
Figur 5A einen Schnitt nach Linie V-V in Figur 4A und weitere Varianten B bis G hierzu,
Figur 6A eine Ansicht in Richtung des Pfeils VI in Figur 4A und weitere Varianten B bis E hierzu,
Figur 7 Varianten möglicher Kühlrippenausführungen in der Ansicht in Richtung des Pfeils VI in Figur 4A (Figuren 7A und B) und in einem Schnitt nach Linie V-V in Figur 4A (Figur 7 C) und
Figur 8 eine schematische Darstellung eines Heizgeräts mit einem erfindungsgemäßen Brenner.

### Beschreibung

In den verschiedenen Ausführungsvarianten erhalten gleiche Teile die gleichen Bezugszahlen.

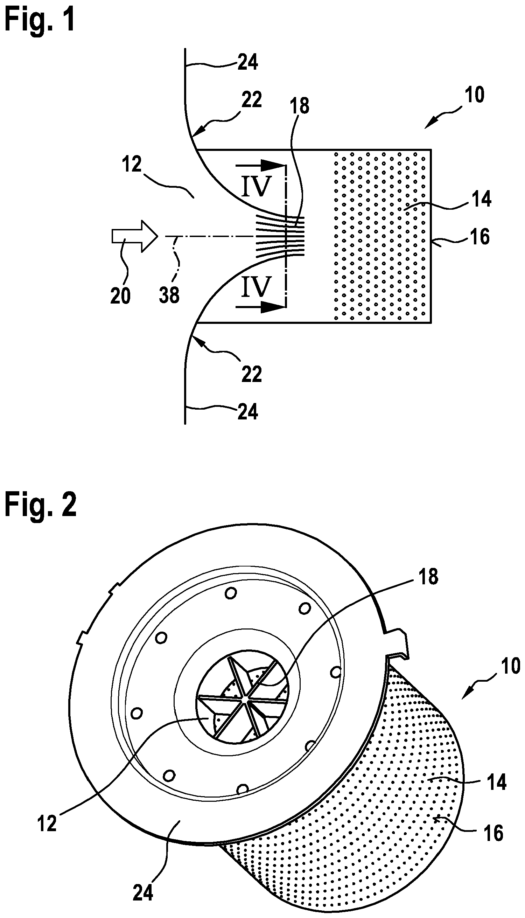

In Figur 1 ist schematisch ein Brenner 10 dargestellt, der eine Öffnung 12 für Luft und/oder Brennstoff (im weiteren kurz LB-Öffnung 12 genannt, wobei LB für Luft und/oder Brennstoff steht) und eine Luft-Brennstoff-Kammer 14 mit einer Brennerplatte 16 aufweist. In der LB-Öffnung 12 befinden sich Kühlrippen 18.

Der Brenner ist in diesem Ausführungsbeispiel für ein vorgemischtes Luft-Brennstoff-Gemisch 20 ausgelegt, das gemeinsam durch die LB-Öffnung zugeführt wird. Wie in Figur 1 dargestellt ist, strömt dabei das Luft-BrennstoffGemisch 20 in die LB-Öffnung 12, welche in einer trichterförmigen Ausführung dargestellt ist. Der Trichter weist eine Krümmung auf und verjüngt sich in die Luft-Brennstoff-Kammer 14 hinein. Diese Geometrie begünstigt eine laminare Strömung und erhöht die Strömungsgeschwindigkeit an den Kühlrippen 18.

In Figur 1 ist eine die LB-Öffnung 12 aufweisende Aufnahme 22 abgebildet, welche einen Flansch 24 zum Befestigen des Brenners 10 aufweist. Dabei bestehen die Aufnahme und der Flansch aus dem gleichen Werkstück. In Figur 2 ist eine Variante mit einem hervorstehenden Flansch 24 abgebildet. In anderen Ausführungsformen kann der Flansch 24 aus einem beliebigen Material gefertigt sein. Die Befestigungsmethode unterliegt keinen Einschränkungen, so ist das Befestigen insbesondere mittels Klemmen, Schweißen, Löten, Verschrauben, Kleben und Ansaugen möglich.

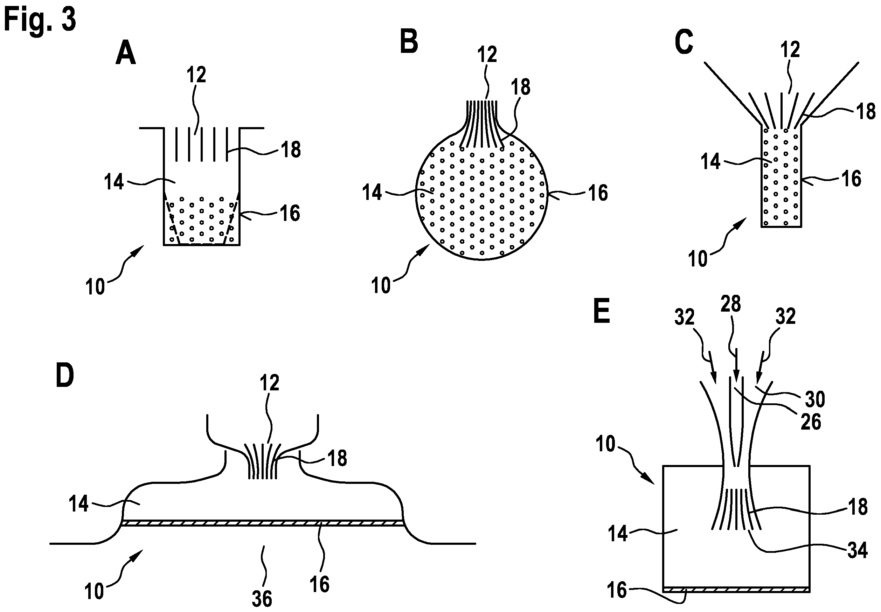

Die LB-Öffnung 12 kann aber auch, angepasst an das Einsatzgebiet und die technischen Anforderungen, anders ausgestaltet werden. In den Figuren 3A bis E sind schematisch weitere mögliche Varianten der LB-Öffnung 12 dargestellt. In Figur 3A wird die LB-Öffnung 12 durch eine offene obere Oberfläche der zylinderförmigen Luft-Brennstoff-Kammer 14 gebildet. In Figur 3B weitet sich die trichterförmige LB-Öffnung 12 in eine kugelförmige Luft-Brennstoff-Kammer 14 auf. Dadurch wird die Strömungsgeschwindigkeit an den Kühlrippen 18 gesenkt, was einen erhöhten Wärmeaustausch ermöglicht. Die Figuren 3C und D zeigen weitere Varianten einer trichterförmigen LB-Öffnung 12.

In Figur 3E ist eine spitz zulaufende Öffnung 26 für den Brennstoff 28 axial in einer trichterförmigen Öffnung 30 für Luft 32 angeordnet. Die Öffnung ist dabei nach dem Prinzip der Venturi-Düse ausgestaltet: die trichterförmige Öffnung für Luft 30 verjüngt sich zunächst und weitet sich danach auf. In der engsten Stelle wird der Brennstoff 28 eingelassen. Dies ermöglicht eine exakte Dosierung des Luft-Brennstoff-Verhältnisses über einen weiten Leistungsbereich. Die Kühlrippen 18 sind im aufgeweiteten Endstück der Öffnung 34 angebracht. Dort kann mit der Ausgestaltungsform der Kühlrippen 18 die Vermischung von Luft und Brennstoff günstig beeinflusst werden.

Figur 3 stellt auch mögliche Ausführungsformen der Luft-Brennstoff-Kammer 14 dar, deren Form an die technischen Anforderungen angepasst werden kann. Dabei kann die Form der Luft-Brennstoff-Kammer 14 unabhängig von der Form der LB-Öffnung 12 gewählt werden. Eine zylinderförmige Geometrie, in den Figuren 1, 3A und C dargestellt, ist beispielsweise in einem Heizgerät zweckmäßig, in welchem der Brenner 10 in eine zylinderförmige Brennkammer eingeschoben werden kann. In Figur 3A ist zudem eine Variante mit teilweise konisch geformter Luft-Brennstoff-Kammer 14 (gestrichelte Linie) abgebildet, was das Einschieben in eine Brennkammer vereinfacht. Figur 3B stellt eine kugelförmige Luft-Brennstoff-Kammer 14 dar, welche eine Wärmeabstrahlung mit besonders großem Raumwinkel ermöglicht. Eine trichterförmige Luft-Brennstoff-Kammer 14, in Figur 3D abgebildet, bietet sich für an einer Decke hängende Heizstrahler an.

Die Ausgestaltung der Brennerplatte 16 unterliegt ebenfalls keinen Einschränkungen bezüglich der Geometrie, dem Material und der konstruktiven Umsetzung. Die Brennerplatte ist im Ausführungsbeispiel aus in der Bewandung der Luft-Brennstoff-Kammer 14 gestanzten Löchern gebildet. Andere mögliche Ausführungsformen sind ein an einer passenden Öffnung in der Luft-Brennstoff-Kammer 14 befestigtes Drahtgitter und/oder ein Vlies aus einem Gewebe und/oder in der Bewandung der Luft-Brennstoff-Kammer 14 gestanzte Löcher. Die Brennerplatte 16 kann die gesamte Bewandung der Luft-Brennstoff-Kammer 14 umfassen, wie in den Figuren 3B und C dargestellt, oder nur eine Teilfläche, wie in den Figuren 3A, D und E abgebildet. In Figur 3 D befindet sich die Brennerplatte 16 in der unteren Öffnung 36 der trichterförmigen Luft-Brennstoff-Kammer 14.

Die Kühlrippen 18 sind im Ausführungsbeispiel hinter der LB-Öffnung 12 und innerhalb der Luft-Brennstoff-Kammer 14 angebracht. In anderen Varianten können die Kühlrippen 18 an einer beliebigen Position in der LB-Öffnung 12 oder zwischen der LB-Öffnung 12 und der Luft-Brennstoff-Kammer 14 angeordnet sein solange sie von der Luft und/oder dem Brennstoff umströmt werden. In den in den Figuren 3A und B gezeigten Varianten befinden sich die Kühlrippen 18 jeweils unmittelbar an der LB-Öffnung 12, in den Figuren 3C bis E sind die Kühlrippen 18 dagegen tiefer, teilweise innerhalb der Luft-Brennstoff-Kammer 14 angebracht.

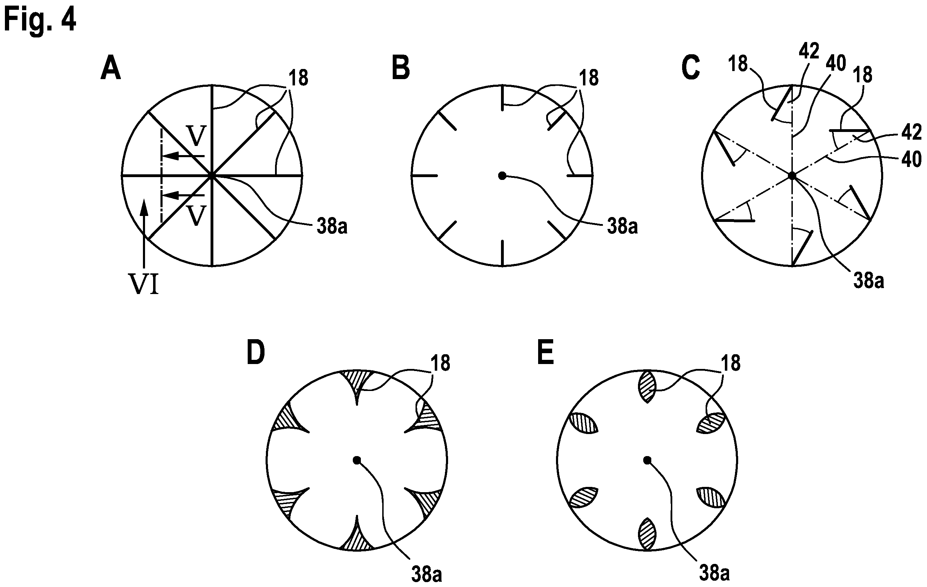

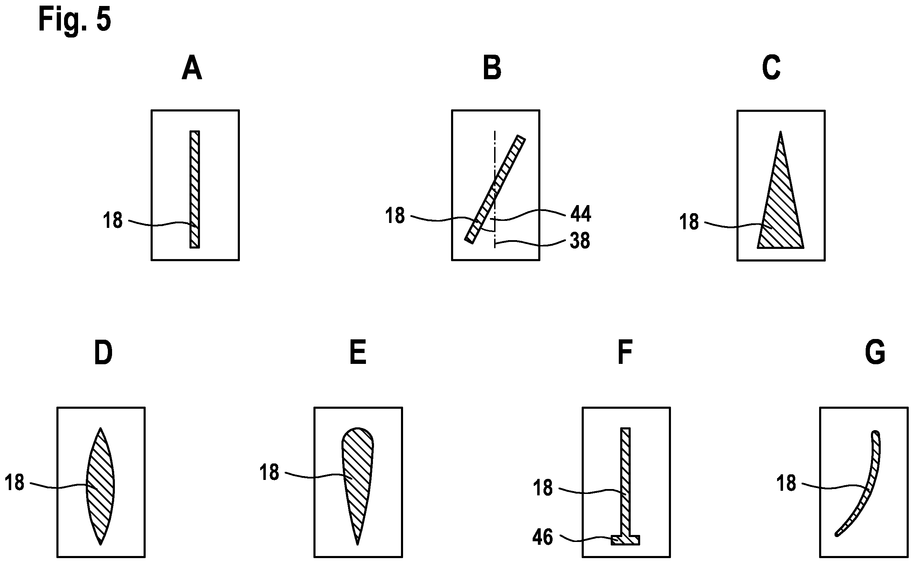

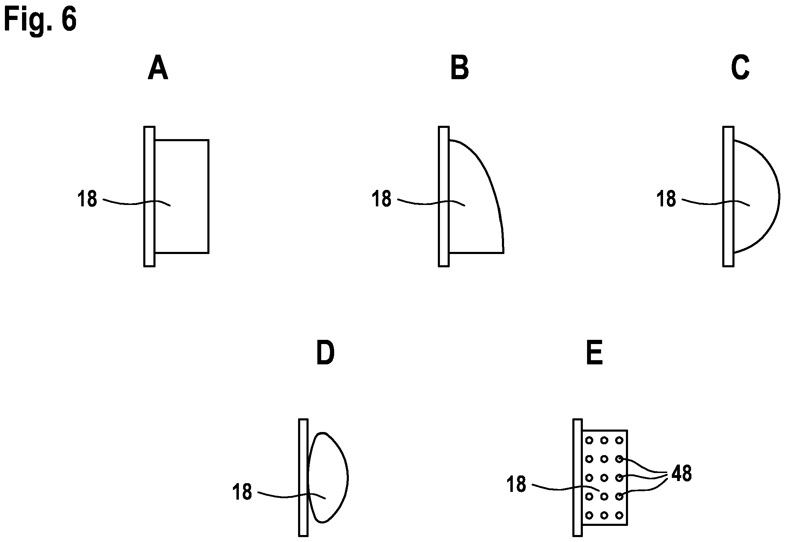

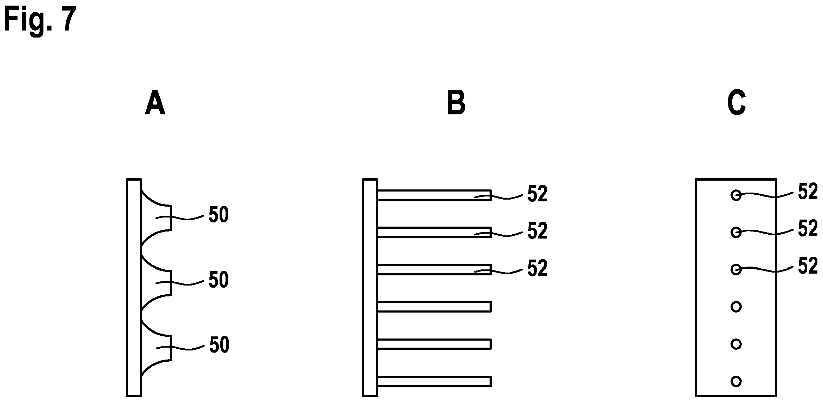

In Figur 4A wird die Kühlrippenanordnungen in einen Schnitt nach Linie IV-IV in Figur 1 dargestellt. Eine einzelne Kühlrippe wird in Figur 5 im Profil (Schnitt nach Linie V-V in Figur 4 A) und in Figur 6 von der Seite (Sicht entlang Richtung VI in Figur 4 A) detaillierter dargestellt. Im Ausführungsbeispiel sind die Kühlrippen 18 in Umfangsrichtung äquidistant angeordnet und zeigen in die durch den Punkt 38a markierte Richtung der Öffnungsachse 38 und treffen dort zusammen. Die äquidistante Anordnung begünstigt eine gleichmäßigere Wärmeverteilung. Zusammen mit den aufeinandertreffenden Kühlrippen 18 verbessert dies den Wärmeaustausch und ermöglicht, beispielsweise bei einem inhomogenen Gaseinfluss, eine gleichmäßigere Wärmeverteilung auf die Kühlrippen 18.
Die mögliche Anordnung und Orientierung der Kühlrippen 18 unterliegt keinen Einschränkungen. Eine aerodynamisch günstige Variation ist in Figur 4B dargestellt, wo die Kühlrippen nicht im Punkt 38a zusammentreffen. Dabei kann die Länge der Kühlrippen 18 in Richtung von Punkt 38a jeweils gleich oder unterschiedlich sein. Auf diese Weise wird der Strömungswiderstand durch die LB-Öffnung 12 reduziert.
Auch andere Orientierungen der Kühlrippen sind möglich. Figur 5C stellt Kühlrippen 18 dar, die jeweils in einem zwischen der Kühlrippe 18 und der Verbindungslinie 40 zwischen dem Auflagepunkt der Kühlrippe 18 und dem Punkt 38a gebildeten Winkel 42 angeordnet sind. Auf diese Weise lassen sich die Strömungseigenschaften der Luft und/oder des Brennstoffs genau einstellen. Erfindungsgemäß kann die Orientierung der Kühlrippen 18 relativ zur Öffnungsachse 38 auch im Betrieb durch einen einstellbaren Winkel 42 verändert werden. So kann im Betrieb der Turbulenzgrad der Luft und/oder des Brennstoffes geregelt werden, etwa um die Kühlleistung an eine variierende Gasdichte oder Brennstoffqualität anzupassen.
Das Strömungsverhalten kann zusätzlich durch das Profil der Kühlrippen 18 beeinflusst werden. In Figur 4D sind die Kühlrippen 18 keilförmig dargestellt, in Figur 4E haben die Kühlrippen ein in der Mitte breiteres und sich nach außen verjüngendes Profil. Ein Profil wie in Figur 4D abgebildet weist eine verbreiterte Kontaktfläche zur Vergrößerung des Wärmestroms auf, wobei durch die Verjüngung zur Mitte der Öffnung 38a hin Turbulenzen vermieden werden.
Dazu ist auch eine geeignete Profilierung entlang der Strömungsrichtung zweckmäßig. In Figur 5A ist das Profil einer Kühlrippe des Ausführungsbeispiels dargestellt, diese hat eine rechteckige Form. Figur 5B zeigt eine Variante, in der die Kühlrippe 18 im Winkel 44 zur Öffnungsachse 38 orientiert ist. Erfindungsgemäß ist dieser Winkel einstellbar ausgebildet. So lassen sich, analog zur in Figur 4C gezeigten Variante, die Strömungseigenschaften der Luft und/ oder des Brennstoffs bedarfsgerecht regeln, beispielsweise um die Kühlleistung zu variieren. Die Figur 5C zeigt ein keilförmiges Profil und in den Figuren 5D und E sind gewölbte Profile zur Vermeidung von Turbulenzen abgebildet. Sind Turbulenzen erwünscht, etwa zur Erhöhung der Kühlleistung oder um die Luft und/oder den Brennstoff besser zu vermischen, können zusätzlich eine oder mehrere Abrisskanten 46 angebracht werden, was in Figur 5F dargestellt ist. Diese können starr oder einstellbar ausgebildet sein. Die Kühlrippe 18 selbst kann auch in Strömungsrichtung gewölbt sein, beispielsweise wie in Figur 5G dargestellt. Auf diese Weise können die Strömungslinien auf Spiralbahnen um die Öffnungsache 38 gelenkt werden. Das ist für eine gleichmäßige Vermischung und Verteilung der Luft und/oder des Brennstoffs in einer insbesondere entlang der Öffnungsachse 38 weit ausgedehnten Luft-Brennstoff-Kammer 14 vorteilhaft.
Figur 6A zeigt eine Kühlrippe 18 aus dem Ausführungsbeispiel, welche in der Seitenansicht rechteckig ausgestaltet ist. In einer anderen Variante kann die Kühlrippe 18 zur Verbesserung der Strömungsverhältnisse finnenförmig ausgestaltet sein und sich in eine Richtung (Figur 6 B) oder in beide Richtungen (Figur 6 C) verjüngen. Figur 6D stellt eine finnenförmige Kühlrippe 18 dar, welche auch auf der Seite der Auflagefläche eine Krümmung aufweist. Dies soll die Verstellbarkeit der Orientierung, wie in Figur 5B gezeigt, bei einer stark in die Richtung der Öffnungsachse 38 gekrümmten Auflagefläche, beispielsweise bei einer kreisförmigen LB-Öffnung 12 mit kleinem Öffnungsradius, sicherstellen.
Zur Erzeugung von Turbulenzen kann die Kühlrippe 18 in die Seitenfläche gestanzte Öffnungen 48 aufweisen, wie in Figur 6E abgebildet. Andere Ausführungsvarianten können durch ein angebrachtes und/oder ein die Kühlrippe bildendes Drahtgitter und/oder Gewebe und/oder gestanzte Öffnungen 44 realisiert werden.
Dabei beschränkt sich der Begriff Kühlrippe nicht allein auf flache, plattenförmige Ausführungsformen wie in den Figuren 5 und 6 gezeigt, Figur 7 stellt weitere Varianten dar. Die Kühlrippen können beispielsweise auch aus Noppen 50 (Figur 7 A) oder Stäben 52 (Figuren 7B und C) gebildet werden. Durch die Wahl der Anordnung und der Abstände der Noppen 50 oder Stäbe 52 zueinander kann der Turbulenzgrad eingestellt werden.

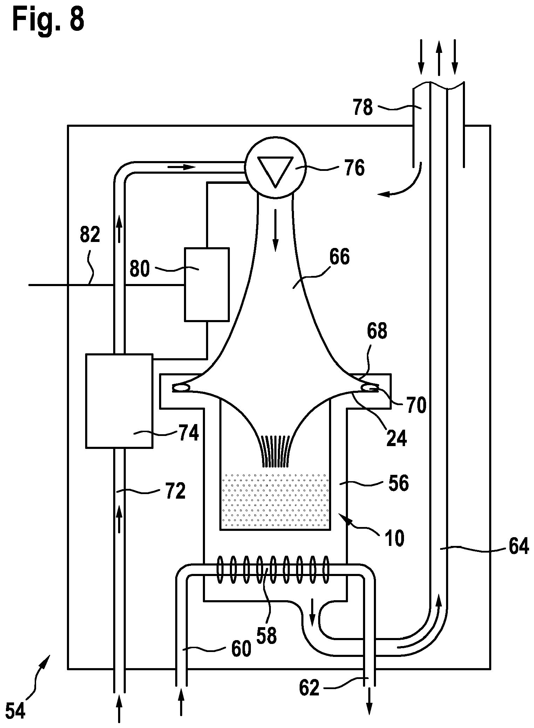

Figur 8 stellt ein Heizgerät 54 zum Erhitzen von Wasser mit einem Brenner 10 dar. Es sind Varianten mit einem anderen Einsatzzweck möglich, insbesondere können unter dem Begriff "Heizgerät" Brennwertöfen, Brennöfen, Hochöfen, Heizgeräte und Backöfen subsumiert werden.

In Figur 8 befindet sich der Brenner 10 in einer Brennkammer 56, welche einen Wärmetauscher 58 aufweist. Dieser erwärmt mit den warmen Abgasen das über eine Heizwasserzuleitung 60 zugeführte kalte Wasser. Das dann warme Wasser wird über eine Heizwasserableitung 62 abtransportiert.

Die kalten Abgase werden über einen Abgaskanal 64 abgeführt. Der Brenner 10 ist mit einer Luft-Brennstoff-Leitung 66 verbunden, welche eine Brenneraufnahme 68 aufweist. Zwischen dem Flansch 24 des Brenners und der Brenneraufnahme 68 befindet sich eine Dichtung 70. Diese verhindert das Entweichen von Brennstoff. Die Dichtung 70 ist im Ausführungsbeispiel aus Silikon gefertigt. In alternativen Varianten kann die Dichtung aus einem anderen Material gefertigt sein, etwa aus einem Kunststoff, Metall oder Verbundstoff, welcher an die Art der Befestigung und des verwendeten Brennstoffes angepasst ist. Auch kann es möglich sein, keine Dichtung zu verwenden, zum Beispiel wenn die Befestigungsmethode abdichtend wirkt, etwa Kleben, Schweißen oder Löten. Dabei sind die Anforderungen an die Hitzebeständigkeit der Dichtung 70 durch die Verwendung der Kühlrippen 18 reduziert.

Der Brennstoff wird durch eine Brennstoffleitung 72 über eine Ventilgruppe 74 zu einem Lüfter 76 geführt, welcher die über eine Luftöffnung 78 dem Heizgerät zugeführte Luft ansaugt und in die Luft-Brennstoff-Leitung 66 leitet. Der Druck des Brennstoffs wird dabei durch die Ventilgruppe 74 auf den Umgebungsdruck der zugeführten Luft eingestellt. In einer anderen Variante kann der Druck zur Steuerung des Luft-Brennstoff-Verhältnisses variiert werden.

Im Ausführungsbeispiel wird der Brennstoff schon im Lüfter 76 teilweise mit der Luft vermischt, weiterhin ist auch eine Vermischung erst in der Luft-Brennstoff-Kammer 14 möglich, wie in der in Figur 3E dargestellten Ausführungsvariante. Der Lüfter 76 wird mit einer variablen Drehzahl betrieben um so die Brennerleistung einzustellen. Die Ventilgruppe 74 und der Lüfter 76 werden von einem Steuergerät 80 geregelt. Das Steuergerät 80 weist eine aus dem Heizgerät reichende Datenverbindung 82 auf, welche es erlaubt, die Betriebsparameter, wie etwa die Brennerleistung oder Heiztemperatur, von außen einzustellen.

In anderen Varianten kann das Steuergerät 80 auch weitere Heizgerätkomponenten steuern, beispielsweise die in den Figuren 4C und 5B dargestellten einstellbaren Kühlrippen 18.

Auch ist es möglich, dass an das Steuergerät nicht abgebildete Messvorrichtungen wie Temperatursensoren, Durchflussmesser oder Lambdasonden angeschlossen sind.

Die Datenverbindung 82 kann in anderen Varianten beispielsweise auch in der Form einer Infrarot- oder Funkverbindung realisiert werden, zum Beispiel durch ein WLAN Signal.

Insbesondere das hitzeempfindliche Steuergerät 80 und die Ventilgruppe 74, aber auch andere Brennerkomponenten, sind in unmittelbarer Nähe zum Brenner 10 angeordnet und profitieren von einer Temperaturabsenkung durch die Kühlrippen 18.

## Patentansprüche

1. Brenner (10) mit einer Öffnung für Luft und/oder Brennstoff (12), einer Luft-Brennstoff-Kammer (14), deren Bewandung eine Brennerplatte (16) aufweist, wobei in der Öffnung für die Luft und/oder den Brennstoff (12) und/oder zwischen der Öffnung für die Luft und/oder den Brennstoff (12) und der Brennerplatte (16) von der Luft und/oder dem Brennstoff umströmte Kühlrippen (18) angebracht sind, **dadurch gekennzeichnet, dass** die Kühlrippen (18) in ihrer Orientierung relativ zu einer Öffnungsachse (38) einstellbar angeordnet sind.

2. Brenner (10) nach Anspruch 1, **dadurch gekennzeichnet, dass** die Öffnung für Luft und/oder Brennstoff (12) der Luft-Brennstoff-Kammer (14) trichterförmig ist.

3. Brenner (10) nach Anspruch 1 oder 2, **dadurch gekennzeichnet, dass** die Luft-Brennstoff-Kammer (14) und/oder eine die Öffnung für Luft und/oder Brennstoff (12) aufweisende Aufnahme (22) einen Flansch (24) zum Befestigen des Brenners (10) in einem Heizgerät aufweist.

4. Brenner (10) nach einem der vorhergehenden Ansprüche, **dadurch gekennzeichnet, dass** die Kühlrippen (18) in Richtung der Öffnungsachse (38) zeigen und/oder in der Öffnungsachse (38) zusammentreffen.

5. Brenner (10) nach einem der vorhergehenden Ansprüche, **dadurch gekennzeichnet, dass** die Kühlrippen (18) jeweils Öffnungen (48) aufweisen.

6. Brenner (10) nach einem der vorhergehenden Ansprüche, **dadurch gekennzeichnet, dass** die Kühlrippen (18) jeweils ein gewölbtes Profil aufweisen.

7. Brenner (10) nach einem der vorhergehenden Ansprüche, **dadurch gekennzeichnet, dass** die Luft-Brennstoff-Kammer (14) zylinderförmig ist.

8. Brenner (10) nach einem der Ansprüche 2 bis 7, **dadurch gekennzeichnet, dass** die trichterförmige Öffnung für Luft und/oder Brennstoff (12) eine von der Öffnungsachse (38) wegzeigende Krümmungsrichtung aufweist und sich in Strömungsrichtung von Luft und/oder Brennstoff verjüngt.

9. Heizgerät (54) mit einem Brenner (10) nach einem der vorhergehenden Ansprüche.

10. Heizgerät (54) nach Anspruch 9, **dadurch gekennzeichnet, dass** der Brenner (10) über einen oder den Flansch (24) und eine Dichtung (70) im Heizgerät befestigt ist.

## Claims

1. Burner (10) with an opening for air and/or fuel (12), with an air-fuel chamber (14) the walls of which have a burner plate (16), wherein in the opening for the air and/or fuel (12) and/or between the opening for the air and/or the fuel (12) and the burner plate (16) there are affixed cooling fins (18) around which the air and/or the fuel flows, **characterized in that** the cooling fins (18) are arranged so as to be adjustable in their orientation relative to an opening axis (38).

2. Burner (10) according to Claim 1, **characterized in that** the opening for air and/or fuel (12) of the air-fuel chamber (14) is in the shape of a funnel.

3. Burner (10) according to Claim 1 or 2, **characterized in that** the air-fuel chamber (14) and/or a recess (22) featuring the opening for air and/or fuel (12) has a flange (24) for securing the burner (10) in a heating device.

4. Burner (10) according to one of the preceding claims, **characterized in that** the cooling ribs (18) point in the direction of the opening axis (38) and/or meet in the opening axis (38).

5. Burner (10) according to one of the preceding claims, **characterized in that** the cooling ribs (18) each have openings (48).

6. Burner (10) according to one of the preceding claims, **characterized in that** the cooling ribs (18) each have a curved profile.

7. Burner (10) according to one of the preceding claims, **characterized in that** the air-fuel chamber (14) is cylindrical.

8. Burner (10) according to one of Claims 2 to 7, **characterized in that** the funnel-shaped opening for air and/or fuel (12) has a direction of curvature pointing away from the opening axis (38) and narrows in the flow direction of air and/or fuel.

9. Heating device (54) having a burner (10) according to one of the preceding claims.

10. Heating device (54) according to Claim 9, **characterized in that** the burner (10) is secured in the heating device by means of a or the flange (24) and a seal (70).

## Revendications

1. Brûleur (10) comprenant une ouverture pour l'air et/ou le combustible (12), une chambre à air-combustible (14) dont la paroi présente une plaque de brûleur (16), des ailettes de refroidissement (18) autour desquelles circulent l'air et/ou le combustible étant montées dans l'ouverture pour l'air et/ou le combustible (12) et/ou entre l'ouverture pour l'air et/ou le combustible (12) et la plaque de brûleur (16), **caractérisé en ce que** les ailettes de refroidissement (18) sont disposées de manière ajustable dans leur orientation par rapport à un axe de l'ouverture (38) .

2. Brûleur (10) selon la revendication 1, **caractérisé en ce que** l'ouverture pour l'air et/ou le combustible (12) de la chambre à air-combustible (14) est en forme d'entonnoir.

3. Brûleur (10) selon la revendication 1 ou 2, **caractérisé en ce que** la chambre à air-combustible (14) et/ou un logement (22) présentant l'ouverture pour l'air et/ou le combustible (12) présente(nt) une bride (24) pour fixer le brûleur (10) dans un appareil de chauffage.

4. Brûleur (10) selon l'une quelconque des revendications précédentes, **caractérisé en ce que** les ailettes de refroidissement (18) sont orientées dans la direction de l'axe de l'ouverture (38) et/ou convergent dans l'axe de l'ouverture (38).

5. Brûleur (10) selon l'une quelconque des revendications précédentes, **caractérisé en ce que** les ailettes de refroidissement (18) présentent à chaque fois des ouvertures (48).

6. Brûleur (10) selon l'une quelconque des revendications précédentes, **caractérisé en ce que** les ailettes de refroidissement (18) présentent à chaque fois un profil courbe.

7. Brûleur (10) selon l'une quelconque des revendications précédentes, **caractérisé en ce que** la chambre à air-combustible (14) est cylindrique.

8. Brûleur (10) selon l'une quelconque des revendications 2 à 7, **caractérisé en ce que** l'ouverture en forme d'entonnoir pour l'air et/ou le combustible (12) présente une direction de courbure orientée à l'écart de l'axe de l'ouverture (38) et se rétrécit dans la direction d'écoulement d'air et/ou du combustible.

9. Appareil de chauffage (54) comprenant un brûleur (10) selon l'une quelconque des revendications précédentes.

10. Appareil de chauffage (54) selon la revendication 9, **caractérisé en ce que** le brûleur (10) est fixé dans l'appareil de chauffage par le biais d'une ou de la bride (24) et d'un joint d'étanchéité (70).
